(19) Europäisches Patentamt
European Patent Office
Office européen des brevets

(11) **EP 1 789 909 B1**

(12) **EUROPÄISCHE PATENTSCHRIFT**

(45) Veröffentlichungstag und Bekanntmachung des Hinweises auf die Patenterteilung:
**19.08.2009  Patentblatt 2009/34**

(21) Anmeldenummer: **05776279.1**

(22) Anmeldetag: **01.09.2005**

(51) Int Cl.:
*G06K 9/52* $^{(2006.01)}$

(86) Internationale Anmeldenummer:
**PCT/EP2005/009427**

(87) Internationale Veröffentlichungsnummer:
**WO 2006/027158 (16.03.2006 Gazette 2006/11)**

(54) **VERFAHREN ZUR ZUORDNUNG EINES DIGITALEN BILDES IN EINE KLASSE EINES KLASSIFIZIERUNGSSYSTEMS**

METHOD FOR ASSIGNING A DIGITAL IMAGE TO A CLASS OF A CLASSIFICATION SYSTEM

PROCÉDÉ POUR ASSOCIER LE CONTENU D'UNE IMAGE NUMÉRIQUE À UNE CLASSE D'UN SYSTÈME DE CLASSIFICATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.09.2004  DE 102004043149**
**10.01.2005  DE 102005001224**

(43) Veröffentlichungstag der Anmeldung:
**30.05.2007  Patentblatt 2007/22**

(73) Patentinhaber: **Betriebsforschungsinstitut VDEh Institut für angewandte Forschung GmbH 40237 Düsseldorf (DE)**

(72) Erfinder: **COEN, Günther 42549 Velbert (DE)**

(74) Vertreter: **Tilmann, Max Wilhelm et al König Szynka Tilmann von Renesse Patentanwälte Partnerschaft Lohengrinstrasse 11 40549 Düsseldorf (DE)**

(56) Entgegenhaltungen:
- **COEN, GÜNTHER: "Eine neue Methode der Musterklassierung in der digitalen Bildverarbeitung" 18. Mai 2004 (2004-05-18), DEUTSCHE GESELLSCHAFT FÜR ZERSTÖRUNGSFREIE PRÜFUNG , DACH-JAHRESTAGUNG 2004, SALZBURG , XP009058053 Zusammenfassung Kaptiel 5 Gleichungen (13), (15), (16)**
- **BELKASIM S O ET AL: "PATTERN RECOGNITION WITH MOMENT INVARIANTS: A COMPARATIVE STUDY AND NEW RESULTS" PATTERN RECOGNITION, ELSEVIER, KIDLINGTON, GB, Bd. 24, Nr. 12, Januar 1991 (1991-01), Seiten 1117-1138, XP000248340 ISSN: 0031-3203**
- **MINDRU F ET AL: "Moment invariants for recognition under changing viewpoint and illumination" COMPUTER VISION AND IMAGE UNDERSTANDING, ACADEMIC PRESS, SAN DIEGO, CA, US, Bd. 94, Nr. 1-3, April 2004 (2004-04), Seiten 3-27, XP004501957 ISSN: 1077-3142**

**Beschreibung**

Die Erfindung betrifft ein Verfahren zur Zuordnung eines digitalen Bildes in eine Klasse eines Klassifizierungssystems.

Mit der zunehmenden Automatisierung industrieller Prozesse erhält die Automatisierung der Fehlererkennung auf Grundlage optischer Analysemethoden zunehmend an Bedeutung. Optische Fehlererkennungsverfahren wurden in der Vergangenheit von Qualitätssicherungspersonal durchgeführt. Diese haben das zu überprüfende Objekt oder eine Bilddarstellung des zu überprüfenden Objekts betrachtet und mögliche Fehler erkannt. Beispielsweise werden Schweißnähte anhand von Röntgenbildern auf Fehlertypen, wie beispielsweise Risse, ungenügende Durchschweißungen, Bindefehler, Schlacke, Schlackenzeilen, Poren, Schlauchporen, Wurzelkerben, Wurzelfehler, Schwermetalleinschlüsse und Kantenversatz überprüft. Ferner ist es bekannt, radioskopische Bilder von Gußteilen zu betrachten, um Fehler in dem Gußteil zu erkennen, beispielsweise Fremdeinschlüsse, Gaseinschlüsse, Lunker, wie Fadenlunker oder schwammige Lunker, Risse oder Kernstützen. Da solche Fehler ihrer Art nach ähnlich, ihrer Ausprägung und Form nach jedoch unterschiedlich sein können, ist man bei der industriellen Fehlerüberprüfung dazu übergegangen, Fehler verschiedenen Klassen zuzuordnen, wobei die jeweilige Klasse Fehler der gleichen Art enthält. Die Industrienorm EN 1435 beschreibt beispielsweise das Klassifizierungssystem für Schweißnahtfehler. Gemäß dieser Norm werden die bei Schweißnähten auftretenden, anhand von Röntgenbildern erkannten Fehler in die 30 verschiedene Klassen eingeteilt, beispielsweise Klassen für die Fehler Riß, wie beispielsweise Längsriß oder Querriß, ungenügende Durchschweißung, Bindefehler, Fremdeinschlüsse, wie Schlacke, Schlackenzeile, Gaseinschlüsse, wie Pore oder Schlauchpore, oder Schwermetalleinschluß, Einbrandkerben, Wurzelkerbe, Wurzelfehler, und Kantenversatz. Mit der Automatisierung der Prozesse ist man nun bestrebt, das optische Erkennen von Fehlern und Zuordnen dieser Fehler in vorgegebene Klassen durch Bildanalyse mit digitalen Bildaufnahmetechniken aufgenommener und gespeicherter Bilder zu erreichen. Herkömmliche automatisierte Fehlererkennungsmethoden auf Grundlage digitaler Bilder verwenden einen sogenannten "heuristischen Ansatz". Hier werden in einer Bildverarbeitungseinheit Referenzbilder abgelegt und durch einen Bildvergleich versucht, den Inhalt eines digitalen Bildes einem dieser Referenzmuster zuzuordnen.

Auf anderen technologischen Gebieten wird die Zuordnung von Bildinhalten zu Klassen eines Klassifizierungssystems beispielsweise in der Schrifterkennung eingesetzt. Hier bildet beispielsweise jeder Buchstabe seine eigene Klasse, so daß für das Großbuchstabenalphabet beispielsweise 26 Klassen bestehen, nämlich für die Zeichen (A, B, C, D, E, F, G, H, I, J, K, L, M, N, O, P, Q, R, S, T, U, V, W, X, Y, Z). Die OCR-Technologien (Optical Character Recognition) analysieren das durch einen Scanner erzeugte digitale Abbild einer geschriebenen Seite und ordnen die singularisierten Buchstabenzeichen den vorgegebenen Klassen zu. Im Ergebnis "erkennt" die OCR-Technologie den Text und kann die klassifizierten Zeichen einem Textverarbeitungsprogramm als editierbare Buchstabenreihenfolge übergeben. Die erteilten europäischen Patentschriften 0 854 435 B1 und 0 649 113 B1 befassen sich beispielsweise mit dem technischen Gebiet der Zeichenerkennung (Optical Character Recognition).

Zunehmend läßt sich die Technik der Bildverarbeitung in Bereiche unterschiedlicher Teilprozesse unterteilen, deren Technologien sich unabhängig von einander weiterentwickeln. Diese Bereiche werden häufig in die Bildvorverarbeitung, Bildanalyse, Analyse von Bildfolgen, Bildarchivierung und das sogenannte Imaging gegliedert.

Unter Bildvorverarbeitung versteht man die computergestützte Verbesserung der Qualität (Aufbereitung: Entrauschung, Glättung) des jeweiligen digitalen Bildes zur leichteren visuellen Wahrnehmung des Informationsgehaltes dieses Bildes für den Betrachter.

Unter Bildanalyse versteht man die computergestützte Auswertung des Informationsgehaltes des jeweiligen digitalen Bildes durch automatisches und reproduzierbares Strukturieren, Erkennen und Verstehen dieses Bildes.

Unter der Analyse von Bildfolgen versteht man die computergestützte Auswertung des Informationsgehaltes der jeweiligen Folge von digitalen Bildern durch automatisches und reproduzierbares Strukturieren, Erkennen und Verstehen aller Einzelbilder dieser Folge und durch automatisches und reproduzierbares Verstehen des Kontextes der Abfolge der Einzelbilder dieser Bildfolge.

Unter Bildarchivierung versteht man die computergestützte Kompression und Speicherung von digitalen Bildern zusammen mit indizierenden Suchdeskriptoren aus einem kontrollierten Vokabular.

Unter Imaging versteht man die computergestützte Erzeugung synthetischer Graphiken und digitaler Bilder zur Visualisierung und Erläuterung des Informationsgehaltes komplexer Prozesse auf Bild- und Symbolebene für den menschlichen Betrachter.

Die Technik des Zuordnens der Inhalte digitaler Bilder zu einer Klasse eines Klassifizierungssystems ist ein Verfahren der Bildanalyse. Diese läßt sich in drei Teilbereiche: Segmentierung, Objekterkennung und Bildverstehen unterteilen.

Unter Segmentierung versteht man das automatische und reproduzierbare Strukturieren des jeweiligen digitalen Bildes durch Separieren der für die Analyse des Bildes relevanten Objekte voneinander und vom Bildhintergrund. Unter Objekterkennung versteht man die automatische und reproduzierbare Klassifikation der separierten Objekte. Das Bildverstehen kann aufgefaßt werden als das automatische und reproduzierbare Interpretieren des jeweiligen digitalen Bildes durch Kontextbewertung der klassierten, separierten Objekte. Die Technik des Zuordnens digitaler Bilder zu einer Klasse eines Klassifizierungssystems ist ein Verfahren der Objekterkennung.

Die Objekterkennung kann aufgefaßt werden als ein Teilgebiet der Mustererkennung und zwar als das Teilgebiet der Mustererkennung, das als Muster nur ebene Objekte in Bildern erkennt.

Die Darstellung der Bilder erfolgt regelmäßig durch ein aus Bildpunkten zusammengesetztes Bild, wobei zur Darstellung des Bilds der Inhalt eines jeden Bildpunktes und dessen Lage im Bild bekannt sein muß. Abhängig von dem Inhaltsattribut lassen sich die Bilder in Farbbilder, Grauwertbilder und Binärbilder, wobei Binärbilder als Inhaltsattribut beispielsweise nur die Werte 0 und 1 für schwarz und weiß annehmen.

Ein in der Technik häufig eingesetztes Verfahren zur Zuordnung eines digitalen Bildes in eine Klasse eines Klassifizierungssystems, das jahrzehntelang erfolgreich zur Unterscheidung militärischer Flugzeuge (Freund-Feind-Erkennung) eingesetzt wurde, ist aus M. K. Hu: "Visual Pattern Recognition by Moment Invariants", IRE Trans. Info. Theory, vol. IT-8, 1962, pp. 179-187 und R. C. Gonzalez, R. E. Woods: "Digital Image Processing", Addison-Wesley Publishing Company, 1992, pp. 514-518 bekannt. Auf der Basis der so genannten normierten, zentralisierten axialen Momente, die durch Bildanalysetechniken aus der Bildwiedergabe gewonnen werden, läßt sich durch Skalierung für jedes beliebige, separierte, beschränkte, ebene Objekt in einem Binärbild eine endliche Folge $\{\phi_l\}$ von 7 dimensionslosen Formmerkmalen erzeugen. Betrachtet man die 7 Folgenglieder $\phi_l$, $(0 \leq l \leq l_0 = 7)$ als die Koordinaten eines Merkmalsvektors $\Phi = (\phi 1, \phi 2, \phi 3, \phi 4, \phi 5, \phi 6, \phi 7)$, der Element eines 7-dimensionalen, euklidischen Merkmalsraums $M_7$ ist, dann induziert dieses Verfahren eine Objekterkennung in diesem 7-dimensionalen Merkmalsraum $M_7$. Sie hat, gemessen an der Objekterkennung mittels heuristischer Merkmale die Vorteile, daß die Klassierung ausschließlich mit Merkmalsvektoren $\Phi = (\phi 1, \phi 2, \phi 3, \phi 4, \phi 5, \phi 6, \phi 7)$, deren Koordinaten dimensionslose Formmerkmale sind, geschieht, so daß insbesondere Größenunterschiede zwischen den zu erkennenden Objekten und den für die Erstellung der Vergleichstabelle verwendeten Objekten bedeutungslos sind. Ferner ist innerhalb der Menge der dimensionslosen Formmerkmale $\phi_l$, durch den Koordinatenbezug zum Merkmalsvektors $\Phi$ eine eindeutige Reihenfolge bezüglich der Relevanz der Merkmale für die Objekterkennung in der digitalen Bildverarbeitung vorgegeben, so daß eindeutig ist, daß das erste Merkmal $\phi 1$ das wichtigste ist.

Dennoch ist dieses Verfahren nachteilbehaftet, da die Zahl der verfügbaren dimensionslosen Formmerkmale auf 7 begrenzt ist und somit bei komplexen Objekten eine Fehlklassifizierung erfolgen kann, wenn sich für zwei unterschiedliche Klassen gleiche Werte für die 7 dimensionslosen Formmerkmale ergeben.

Vor diesem Hintergrund liegt der Erfindung die Aufgabe zugrunde, ein Verfahren zum Zuordnen des Inhalts eines digitalen Bildes in eine Klasse eines Klassifizierungssystems vorzuschlagen, mit dem auch Zeichen komplexerer Form sicher erkannt werden können.

Diese Aufgabe wird mit den Verfahren gemäß dem Anspruch 1 gelöst. Vorteilhafte Ausgestaltungen sind in den Unteransprüchen angegeben.

Die Erfindung geht von dem Grundgedanken aus, für das zu analysierende Bild einer vorbestimmte Anzahl von numerischen Formmerkmalen $\Psi_m$ mit m als Zählindex, der von 1 bis F läuft, zu ermitteln, wobei $\Psi_m$ ein transformierter Ausdruck des dimensionslosen, skalierten, normierten, zentralisierten, polaren Moment $\overline{\rho^m}$ ist. Diese voneinander unabhängigen Formmerkmale $\psi_m$ können zur Zuordnung des Inhalts des digitalen Bildes mit in einer Tabelle abgelegten Werten für diese Formmerkmale verglichen werden. Bei einer Übereinstimmung der Werte sämtlicher ermittelter F Formmerkmale $\psi_m$ mit den für eine Klasse in der Tabelle abgelegten F Formmerkmalen $\psi_m$ gehört der Bildinhalt des analysierten Bildes dieser Klasse an. Aufgrund der Digitalisierung ist hierbei bevorzugt mit Nährungswerten zu arbeiten, so daß eine Klassenzuordnung auch bereits dann ausgegeben wird, wenn die berechneten F Formmerkmale $\psi_m$ näherungsweise mit den F abgelegten Formmerkmalen $\psi_m$ einer Klasse übereinstimmen.

Im Gegensatz zu der aus dem Stand der Technik bekannten auf 7 Formmerkmale begrenzten Methode sind die erfindungsgemäß zu Bildanalyse vorgeschlagenen numerischen Formmerkmale $\psi_m$ derart unabhängig voneinander, daß eine große Zahl von Formmerkmalen aufgestellt werden kann, ohne das eine Abhängigkeit der Formmerkmale zueinander entsteht. Dadurch kann eine eindeutige Zuordnung der zuerkennenden Bildinhalte in eine vorgesehene Klasse erreicht werden.

Das erfindungsgemäße Verfahren ist insbesondere unabhängig von der relativen Lage des zu erkennenden Inhalts zu der Aufnahmevorrichtung. Auch um beispielsweise 60˚ oder 180˚ gedrehte Objekte können eindeutig zugeordnet werden.

Das Verfahren basiert auf der Berechnung einer Folge von F funktional unabhängigen, dimensionslosen Merkmalen des separierten, beschränkten Inhalts im jeweils vorliegenden Bild.

Das Bild wird in herkömmlicher Weise durch N Bildpunkte dargestellt, wobei ein Bildpunkt in einem vorbestimmten Koordinatensystem an dem Ort $(x_i, y_j)$ liegt und das Bild sich über die Koordinaten $(0,0)$ bis $(x_{imax}, y_{imax})$ erstreckt und imax die maximale Zahl der Bildpunkte in Richtung der x-Koordinate und ymax die maximale Zahl der Bildpunkte in Richtung der y-Koordinate ist und jedem Bildpunkt ein Inhaltsattribut data [j,i] zugeordnet ist.

Das Inhaltsattribut ist für eine binär-dargestelltes Bild, bei dem der jeweilige Bildpunktinhalt beispielsweise entweder den Wert 1 oder 0 für schwarz oder weiß annimmt, beispielsweise ein einzelner Wert, der in einer Tabelle abgelegt ist, und data [j,i] stellvertretend für den Wert in dieser Tabelle am dem dem Bildpunkt zugeordneten Ort ist. Bei farbigen Bildern, bei denen sich das Inhaltsattribut jedes Bildpunkt beispielsweise aus drei Werten für die 3 Farbendarstellung "rot,grün,blau" (RGB-Darstellung) zusammensetzt, ist das Inhaltsattribut data [j,i] beispielsweise stellvertretend für einen Vektor, der diese drei Werte für den jeweiligen Bildpunkt enthält. Data[j,i] kann auch stellvertretend für andere Vektoren sein, falls andere Farbdarstellungen verwendet werden, bzw. Graustufendarstellungen. data [j,i] kann auch stellvertretend für den Betrag eines solchen Vektors stehen, wenn eine Mehrfarbendarstellung vor dem Einsatz des erfindungsgemäßen Klassifizierungsverfahrens von einer Mehrfarbendarstellung, beispielsweise einer RGB-Darstellung, in eine Graustufen oder sogar binäre Darstellung umgewandelt wird.

Bei einer Farbdarstellung, beispielsweise einer RGB-Darstellung, kann data[j,i] zudem auf für den Einzelwert der Rot-Darstellung, bzw. Grün-Darstellung, bzw. Blau-Darstellung im Bildpunkt stehen. Das Klassifizierungsverfahren wird dann beispielsweise ausschließlich anhand einer Darstellung, beispielsweise der Rot-Darstellung, durchgeführt, wobei das Verfahren dann gleich dem vorstehenden Verfahren für Binär-Darstellungen durchgeführt wird. Es können dann ebenfalls binäre Werte 1 und 0 für data[j,i] am Bildpunkt verwendet werden, wobei 1 beispielsweise für rot und 0 für leer steht. Ebenso kann das Klassifizierungsverfahren parallel für die verschiedenen Farb-Darstellungen durchgeführt werden, also parallel für eine binäre Rot-Darstellung, eine binäre Grün-Darstellung und eine binäre Blau-Darstellung. Hierdurch wird die Genauigkeit der Klassifizierung erhöht.

Das in das numerische Formmerkmal $\psi_m$ transformierte Moment $\overline{\rho^m}$ berechnet sich aus

$$\overline{\rho^m} = k_m \overline{R^m}$$

mit

$$k_m = \frac{(m+2)}{2}\left(\frac{\pi}{|A|}\right)^{\frac{m}{2}}$$

$$A = m_{0,0} = \Delta a * \Delta b * \sum_{j=1}^{j\max} \sum_{i=1}^{i\max} data[j,i]$$

$$\overline{R^m} = \frac{\upsilon_m}{\upsilon_0} = \frac{\upsilon_m}{m_{0,0}}$$

$$\upsilon_m = \Delta a * \Delta b * \sum_{j=1}^{j\max} \sum_{i=1}^{i\max} (R(j,i))^m data[j,i]$$

$$R(j,i) = \sqrt{((i-0,5)*\Delta a - \overline{x})^2 + ((j-0,5)*\Delta b - \overline{y})^2}$$

$$\overline{x} = \frac{m_{1,0}}{m_{0,0}}$$

$$\overline{y} = \frac{m_{0,1}}{m_{0,0}}$$

$$m_{1,0} = (\Delta a)^2 * \Delta b * \sum_{j=1}^{j\,\mathrm{max}} \sum_{i=1}^{i\,\mathrm{max}} (i - 0,5) * data[j,i]$$

$$m_{0,1} = (\Delta b)^2 * \Delta a * \sum_{j=1}^{j\,\mathrm{max}} \sum_{i=1}^{i\,\mathrm{max}} (j - 0,5) * data[j,i]$$

$\Delta a$ = Breite des Bildpunktes in x-Koordinaten Richtung
$\Delta b$ = Breite des Bildpunktes in y-Koordinaten Richtung
data [j,i] = Inhaltsattribut des Bildpunkts an der Stelle ($y_j$, $x_i$)
m = Durchlaufende Zahl von 1 bis F.

Das vorbestimmte Koordinatensystem ist besonders bevorzugt ein kartesische Koordinatensystem, da die meisten digitalen Bilder die Bildpunkte über ein kartesisches Koordinatensystem definieren. Es können jedoch auch andere Koordinatensysteme, beispielsweise polare Koordinatensysteme eingesetzt werden.

Während derzeit digitale Bilder in der Regel mit 1 bis zu 3 Millionen Bildpunkten (pixel) dargestellt werden können, ist zu erwarten, daß sich die Zahl N mit dem Fortschritt der Bildaufnahme und -verarbeitungstechnik zunehmend erhöht, so daß die vorgenannten Summenfunktionen annähernd in Integralfunktionen übergehen.

Insbesondere wird ein Bildinhalt durch die Anordnung von Bildpunkten gleichen Inhaltsattributs definiert.

Die F ermittelten Formmerkmale des Bildinhalts ergeben einen Merkmalsvektor in einem beschränkten, F-dimensionalen Teilbereich (Einheits-Hyperwürfel) des F-dimensionalen Merkmalsraum. Die Inhaltsklassierung geschieht schließlich durch problemspezifisches Clustern dieses n-dimensionalen Einheits-Hyperwürfels.

Das Klassifizierungssystem kann beispielsweise eine vorgegebene Industrienorm sein, wie beispielsweise die EN 1435. Bei der Personenerkennung kann beispielsweise jede Person eine eigene Klasse bilden. So werden in der Vergleichstabelle die F Formmerkmale $\psi_m$, die den Fingerabdruck oder das Iris-Bild der zu erkennenden Person charakterisieren, abgelegt. Zur Personenerkennung wird das von einer Aufnahmeeinheit, beispielsweise Kamera, aufgenommene Bild der Iris nach dem erfindungsgemäßen Verfahren analysiert, wobei die F Formmerkmale $\psi_m$ der aufgenommenen Iris berechnet werden und mit den in der Tabelle abgelegten Formmerkmals-Werten verglichen werden. Ergibt sich eine (annäherungsweise) Übereinstimmung mit allen Werten der Formmerkmale $\psi_m$ einer Klasse, so hat das System die Person, die durch diese Klasse charakterisiert wird erkannt. Für die Bestimmung der näherungsweisen Übereinstimmung kann vorzugsweise eine Methode der kleinsten Quadrate, beispielsweise nach Gauss, verwendet werden.

Wird ein digitales Bild erkannt, daß in einer anderen als einer Binär-Darstellung dargestellt wird, so können die vorgenannten Verfahrensschritte für mehrere Gruppen mit F numerischen Formmerkmalen $\psi_m$ durchgeführt werden, beispielsweise in einer Gruppe für Werte einer Rot-Darstellung, in einer Gruppe für Werte einer Grün-Darstellung und in einer Gruppe für Werte einer Blau-Darstellung. Alternativ können die vorgenannten Verfahrensschritte auch an Inhaltsattributen data[j,i] durchgeführt werden, die als Vektor die einzelnen Werte der einzelnen Farb-Darstellungen enthalten. Divisions-Rechenoperationen werden dann bevorzugt an den Beträgen der Vektoren durchgeführt.

In einer bevorzugten Ausführungsform wird das Formmerkmal $\psi_m$ durch die Transformation

$$\psi_m = \sqrt[m]{\frac{1}{\overline{\rho^m}}}$$

ermittelt. Als Transformation von $\psi_m$ zu $\overline{\rho^m}$ sind jedoch auch andere Transformationen, sogar eine Gleichsetzung $\psi_m = \overline{\rho^m}$ möglich.

Das mit den in der Tabelle abgelegten Werten zu vergleichende Formmerkmal ist vorzugsweise das mittels der vorgenannten Transformation gewonnene Formmerkmal $\psi_m$. Vor dem Vergleich mit den Tabellenwerten oder in

der Transformation aus $\overline{\rho^m}$ kann die Reihe der F Formmerkmale einem Orthogonalisierungsverfahren unterworfen werden, wie es beispielsweise nach E. Schmidt durchgeführt wird. Hierbei können die zu vergleichenden Formmerkmal insbesondere derart umgerechnet werden, daß sich für einen Kreis eine Reihe von F Formmerkmalen $\psi_1$, $\psi_2$, $\psi_3$, $\psi_4$, $\psi_5$ ... $\psi_F$ mit Werten von 1,0,0,0,0 ... 0 ergibt.

Um die Zahl F der numerischen Formmerkmale $\psi_m$ festzulegen, kann aus mehreren, insbesondere mehr als 29 Proben pro Klasse des Klassifizierungssystems die Zahl F ausgehend von F=1 soweit erhöht werden, daß sich die für die Proben einer Klasse ermittelten Werte für das jeweilige Formmerkmal $\psi_m$ zu mindestens in einem numerischen Wert für mindestens ein Formmerkmal $\psi_m$ von dem numerischen Wert dieses Formmerkmals $\psi_m$ der anderen Klasse unterscheidet. Besonders bevorzugt wird die Zahl F der Formmerkmale soweit erhöht, bis die Werte der Formmerkmale mit den höchsten Ordnungsziffern m in allen Klassen mit zunehmender Ordnungsziffer abnehmen. Die für die mindestens 29 Proben pro Klasse ermittelten Werte des jeweiligen Formmerkmals $\psi_m$ können zur Bestimmung eines, für diese Klasse für dieses Formmerkmal einzusetzenden Werts arithmetisch gemittelt werden.

Die nachfolgende wiedergegebene Tabelle nur zur Veranschaulichung frei gewählter Zahlenwerten zeigt, daß für die Bestimmung des Schweißnahtfehlers auf die Zugehörigkeit zu den Fehlerklassen "Riß", "Pore", "Schlauchpore" eine Zahl F=1 von numerischen Formmerkmalen $\psi_m$ nicht hinreichend präzise ist, da $\psi_1$ sowohl für den Riß-Klasse als auch die Schlauchporen-Klassen nahezu gleiche Werte annimmt. Erst durch die Hinzunahme des zweiten numerischen Formmerkmals $\psi_2$ wird die Zuordnung eindeutig. Es zeigt sich, daß trotz der ähnlichen Zahlenwerte für $\psi_2$ in der Klasse "Pore" und "Schlauchpore", dieses System aus nur zwei Formmerkmalen $\psi_1$, $\psi_2$ geeignet ist, die 3 Fehler präzise zu klassifizieren.

|          | Riß     | Pore    | Schlauchpore |
|----------|---------|---------|--------------|
| $\psi_1$ | 0,01245 | 0,87231 | 0,01268      |
| $\psi_2$ | 0,00234 | 0,54100 | 0,54612      |

Die Zahl F kann jedoch auch im Wege eines Rotationsellipsen-Bestimmungsverfahren ermittelt werden. Derartig "Cluster-Verfahren" werden beispielsweise in H. Niemann, Klassifikation von Mustern, Springer Verlag, Berlin, 1983, Seite 200ff beschrieben.

Das erfindungsgemäße Verfahren zur Zuordnung des Inhalts eines digitalen Bildes in eine Klasse eines Klassifizierungssystems wird bevorzugt bei der optischen Inspektion von Bauteilen, insbesondere bei der optischen Oberflächeninspektion eingesetzt. Ferner kann das Verfahren bei der Qualitätssicherung, der Textur-, Form- und Konturanalyse, der Photogrammetrie, der Zeichen- und Schrifterkennung, der Personenerkennung, der Robot-Vision oder der Auswertung von radiographischen oder radioskopischen Bildern, Ultraschall-Bildern und Kernspinn-Tomographie eingesetzt werden.

Dabei spielt es keine Rolle, ob es sich bei den Bildern, bezüglich derer die Objekterkennung durchgeführt wird, um "optische" Bilder aus dem Spektralbereich des sichtbaren Lichts oder um radiographische bzw. radioskopische Bilder oder gar um synthetische Bilder aus dem Bereich Imaging handelt. Das Verfahren kann daher im Bereich der optischen Oberflächeninspektion ebenso eingesetzt werden, wie etwa bei der Qualitätssicherung, der Textur-, Form- und Konturanalyse, der Photogrammetrie, der Zeichen- und Schrifterkennung, der Personenerkennung, der Robot-Vision oder der Auswertung von radiographischen bzw. radioskopischen Bildern, Ultraschall-Bildern und Kernspin-Tomographien.

Wenn man im Rahmen dieses breiten Spektrums möglicher Anwendungen ein konkretes Problem der Objekterkennung angeht, dann steht der Komplexitätsgrad des Problems von Beginn an fest:

Es ist bekannt, in wie viele verschiedene Objektklassen K die zu erkennenden Objekte einsortiert werden sollen. Im Gegensatz zur Klassierung auf der Basis heuristischer Merkmale kann bei dem neuen, algorithmischen Verfahren bezüglich jeder Objektklasse die Anzahl der Freiheitsgrade der Form anhand einer repräsentativen Stichprobe von Testobjekten experimentell ermittelt werden. Die Klassierung geschieht ausschließlich mit Merkmalsvektoren $\Psi = (\psi_1, \psi_2, \psi_3, \psi_4, \psi_5, ...., \psi_F)$. Der Merkmalsvektor jedes beliebigen, separierten, beschränkten, ebenen Objekts im Bild liegt im Innern eines beschränkten, normierten F-dimensionalen Teilbereichs ("Einheits-Hyperwürfel") eines F-dimensionalen Merkmalsraums. Die Musterklassierung geschieht durch problemspezifisches Clustern des Inneren dieses F-dimensionalen Einheits-Hyperwürfels.

Nachfolgend wird die Erfindung anhand einer, lediglich ein Ausführungsbeispiel darstellende Zeichnung näher erläutert. Darin zeigen

Fig. 1 drei unterschiedliche Wiedergaben eines ersten zu erkennenden Zeichens;

Fig. 2 drei Darstellungen eines zweiten zu erkennenden Zeichens und

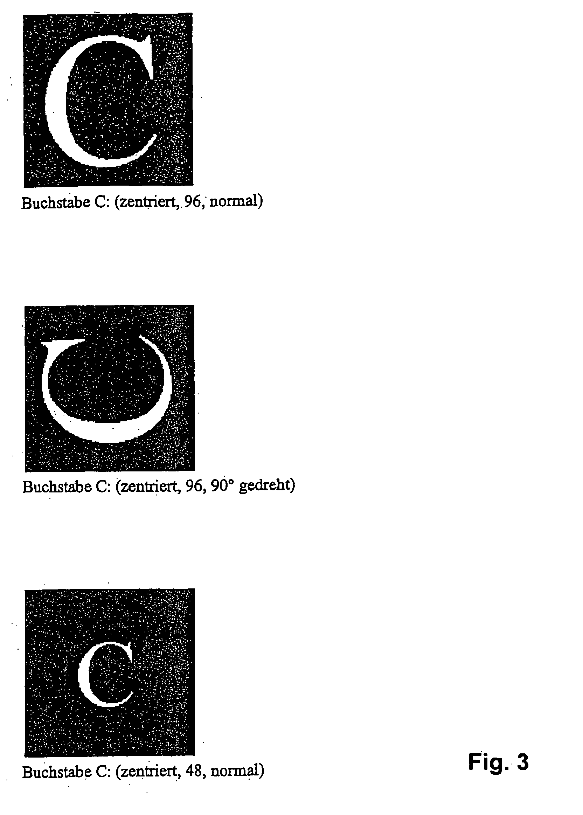

<u>Fig. 3</u> drei Darstellungen eines dritten zu erkennenden Zeichens.

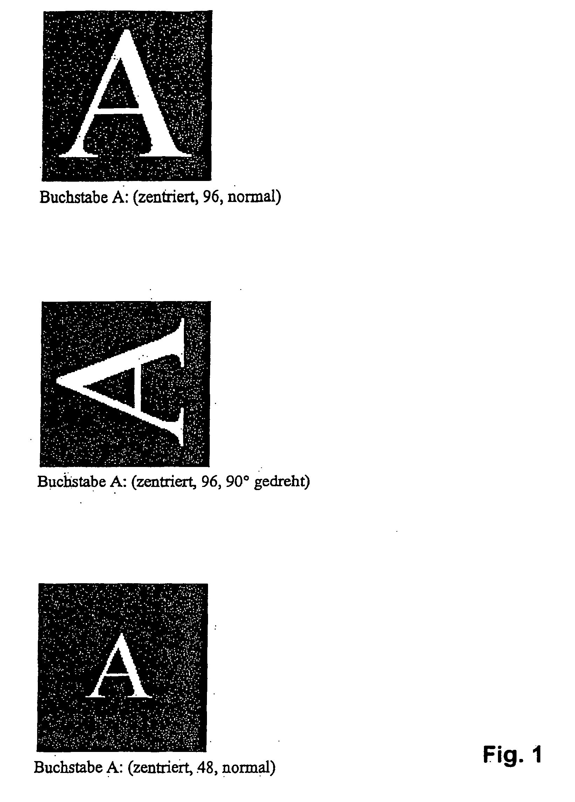

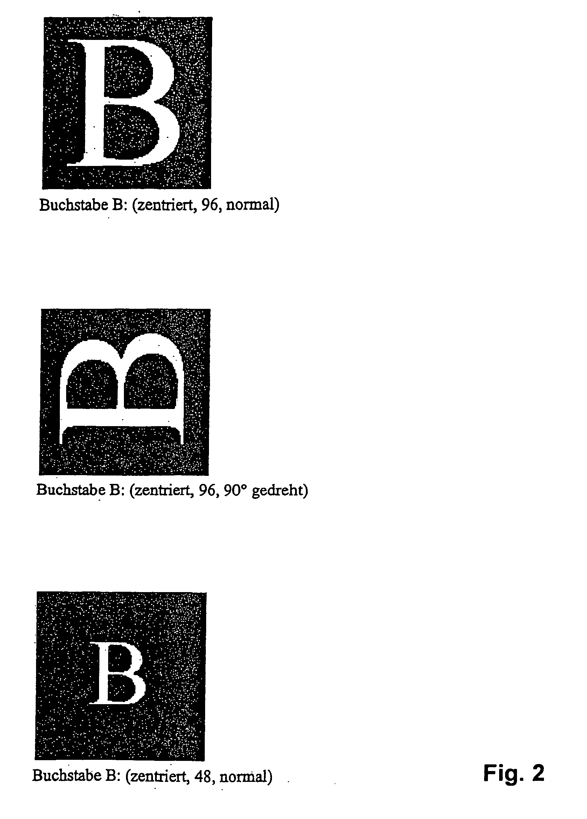

In den Figuren 1, 2 und 3 sind die Buchstaben A, B und C jeweils in drei Darstellungsformen i) normal, ii) normal, aber um 90˚ gedreht, iii) gleiche Ausrichtung wie normal, jedoch kleiner dargestellt. Ferner wurde neben den in den Fig. dargestellten zentrierten Ausrichtungen noch eine Positionierung links und eine Positionierung rechts untersucht.

Die nachfolgende Tabelle zeigt die Werte für $\psi_1$, wobei $\psi_1$ nach der Beziehung

$$\psi_1 = \sqrt{\frac{1}{\overline{\rho^1}}}$$

berechnet wurde.

$\overline{\rho^1}$ ergibt sich dabei aus folgenden Beziehungen

$$\overline{\rho^1} = k_1 \overline{R^1}$$

mit

$$k_1 = \frac{3}{2}\left(\frac{\pi}{|A|}\right)^{\frac{1}{2}}$$

$$A = m_{0,0} = \Delta a * \Delta b * \sum_{j=1}^{j\max} \sum_{i=1}^{i\max} data[j,i]$$

$$\overline{R^1} = \frac{\upsilon_1}{\upsilon_0} = \frac{\upsilon_1}{m_{0,0}}$$

$$\upsilon_1 = \Delta a * \Delta b * \sum_{j=1}^{j\max} \sum_{i=1}^{i\max} (R(j,i))^1 data[j,i]$$

$$R(j,i) = \sqrt{((i-0,5)*\Delta a - \overline{x})^2 + ((j-0,5)*\Delta b - \overline{y})^2}$$

$$\overline{x} = \frac{m_{1,0}}{m_{0,0}}$$

$$\overline{y} = \frac{m_{0,1}}{m_{0,0}}$$

$$m_{1,0} = (\Delta a)^2 * \Delta b * \sum_{j=1}^{j\,\max} \sum_{i=1}^{i\,\max} (i - 0{,}5) * data[j,i]$$

$$m_{0,1} = (\Delta b)^2 * \Delta a * \sum_{j=1}^{j\,\max} \sum_{i=1}^{i\,\max} (j - 0{,}5) * data[j,i]$$

$\Delta a$ = Breite des Bildpunktes in x-Koordinaten Richtung = $\Delta a$ = 0,3175 mm
$\Delta b$ = Breite des Bildpunktes in y-Koordinaten Richtung = $\Delta b$ = 0,3175 mm
data [j,i] = Inhaltsattribut des Bildpunkts an der Stelle $(y_j, x_i)$

Mit den vorgenannten Beziehung und den jeweiligen Datenfeldern für die jeweiligen Darstellungen, in denen Inhaltsattribute an den Stellen $(y_j, x_i)$ abgelegt sind, ergeben sich die in der folgenden Tabelle wiedergegebenen Werte:

Tabelle der nummerischen Werte für das Formmerkmal $\psi_1$

| Buchstabe | Positionierung | Größe | Ausrichtung | Merkmal $\psi_1$ |
|---|---|---|---|---|
| A | links | 96 | normal | 0,576 |
| A | zentriert | 96 | normal | 0,576 |
| A | rechts | 96 | normal | 0,576 |
| A | links | 96 | 90˚ gedreht | 0,574 |
| A | zentriert | 96 | 90˚ gedreht | 0,574 |
| A | rechts | 96 | 90˚ gedreht | 0,574 |
| A | links | 48 | normal | 0,569 |
| A | zentriert | 48 | normal | 0,569 |
| A | rechts | 48 | normal | 0,569 |
| B | links | 96 | normal | 0,609 |
| B | zentriert | 96 | normal | 0,609 |
| B | rechts | 96 | normal | 0,609 |
| B | links | 96 | 90˚ gedreht | 0,608 |
| B | zentriert | 96 | 90˚ gedreht | 0,608 |
| B | rechts | 96 | 90˚ gedreht | 0,608 |
| B | links | 48 | normal | 0,598 |
| B | zentriert | 48 | normal | 0,598 |
| B | rechts | 48 | normal | 0,598 |
| C | links | 96 | normal | 0,445 |
| C | zentriert | 96 | normal | 0,445 |
| C | rechts | 96 | normal | 0,445 |
| C | links | 96 | 90˚ gedreht | 0,444 |
| C | zentriert | 96 | 90˚ gedreht | 0,444 |
| C | rechts | 96 | 90˚ gedreht | 0,444 |
| C | links | 48 | normal | 0,443 |
| C | zentriert | 48 | normal | 0,443 |

(fortgesetzt)

| Buchstabe | Positionierung | Größe | Ausrichtung | Merkmal $\psi_1$ |
|---|---|---|---|---|
| C | rechts | 48 | normal | 0,443 |

Man erkennt, daß der Wert $\psi_1$ für den Buchstaben A Werte um 0,57 einnimmt, für den Buchstaben B Werte um 0,6 und für den Buchstaben C Werte um 0,44. Unabhängig von der tatsächlichen Lage und Größe des Buchstabens kann mit dem erfindungsgemäßen Verfahren somit ein vorher definiertes Zeichen eindeutig erkannt werden.

**Patentansprüche**

1.  Verfahren zur Zuordnung des Inhalts eines digitalen Bildes in eine Klasse eines Klassifizierungssystems, wobei das Bild durch N Bildpunkte dargestellt wird, wobei ein Bildpunkt in einem vorbestimmten Koordinatensystem an dem Ort ($x_i$, $y_j$) liegt und das Bild sich über die Koordinaten (0,0) bis ($x_{imax}$, $y_{imax}$) erstreckt und imax die maximale Zahl der Bildpunkte in Richtung der x-Koordinate und jmax die maximale Zahl der Bildpunkte in Richtung der y-Koordinate ist und jedem Bildpunkt mindestens ein numerisches Inhaltsattribut data [j,i] zugeordnet ist, mit den folgenden Schritten:

    - Ermitteln mindestens einer Gruppe einer vorbestimmten Anzahl von F numerischen Formmerkmalen $\psi_m$ mit m als Zählindex, wobei $\psi_m$ ein transformierter Ausdruck des Moments $\overline{\rho^m}$ ist und $\overline{\rho^m}$ sich aus

$$\overline{\rho^m} = k_m \overline{R^m}$$

mit

$$k_m = \frac{(m+2)}{2}\left(\frac{\pi}{|A|}\right)^{\frac{m}{2}}$$

$$A = m_{0,0} = \Delta a * \Delta b * \sum_{j=1}^{j\,\mathrm{max}} \sum_{i=1}^{i\,\mathrm{max}} data[j,i]$$

$$\overline{R^m} = \frac{\upsilon_m}{\upsilon_0} = \frac{\upsilon_m}{m_{0,0}}$$

$$\upsilon_m = \Delta a * \Delta b * \sum_{j=1}^{j\,\mathrm{max}} \sum_{i=1}^{i\,\mathrm{max}} (R(j,i))^m data[j,i]$$

$$R(j,i) = \sqrt{((i-0,5)*\Delta a - \bar{x})^2 + ((j-0,5)*\Delta b - \bar{y})^2}$$

$$\bar{x} = \frac{m_{1,0}}{m_{0,0}}$$

$$\bar{y} = \frac{m_{0,1}}{m_{0,0}}$$

$$m_{1,0} = (\Delta a)^2 * \Delta b * \sum_{j=1}^{j\,\max} \sum_{i=1}^{i\,\max} (i - 0,5) * data[j,i]$$

$$m_{0,1} = (\Delta b)^2 * \Delta a * \sum_{j=1}^{j\,\max} \sum_{i=1}^{i\,\max} (j - 0,5) * data[j,i]$$

$\Delta a$ = Breite des Bildpunktes in x-Koordinaten Richtung
$\Delta b$ = Breite des Bildpunktes in y-Koordinaten Richtung
data $[j,i]$ = Inhaltsattribut des Bildpunkts an der Stelle ($y_j$, $x_i$)
m = eine mit der Zählung der Formmerkmale durchlaufende
Zahl von 1 bis F
ergibt,

- Vergleichen des Werts jedes Formmerkmals der für das Bild bestimmten F nummerischen Formmerkmale in der mindestens einen Gruppe mit den in einer Tabelle zu dem jeweiligen Formmerkmal dieser Gruppe abgelegten Wert, wobei in der Tabelle jeder Klasse Werte für die einzelnen nummerischen Formmerkmale dieser Gruppe zugeordnet sind,
- Ausgabe der Klasse als Zuordnungsklasse, in die das zu erkennende Bild klassifiziert wurde, bei der die für das Bild bestimmten F nummerischen Formmerkmale den in der Tabelle für diese Klasse angegebenen Werten der nummerischen Formmerkmale am besten entsprechen.

2. Verfahren nach Anspruch 1, **dadurch gekennzeichnet, daß** das Formmerkmalen $\psi_m$ durch die Transformation

$$\psi_m = \sqrt[m]{\frac{1}{\rho^m}}$$

ermittelt wird.

3. Verfahren nach Anspruch 1 oder 2, **dadurch gekennzeichnet, daß** die Zahl F der nummerischen Formmerkmalen $\psi_m$ aus mindestens 29 Proben pro Klasse des Klassifizierungssystems ermittelt wird, indem die Zahl F soweit erhöht wird, daß sich die für die Proben einer Klasse ermittelten Werte für die Formmerkmale $\psi_m$ zumindest in ihrem nummerischen Wert für mindestens ein Formmerkmale $\psi_m$ von den nummerischen Werten dieses Formmerkmals $\psi_m$ der anderen Klassen unterscheiden.

4. Verwendung des Verfahrens nach einem der Ansprüche 1 bis 3 zur Zuordnung von Fehlern von Gußteilen zu in einer Industrie-Norm definierten Fehlerklassen, wobei das digitale Bild mittels Radioskopie erzeugt wird.

5. Verwendung des Verfahren nach einem der Ansprüche 1 bis 3 zur Zuordnung von Fehlern von Schweißnähten zu in einer Industrie-Norm definierten Fehlerklassen, wobei das digitale Bild mittels Radioskopie erzeugt wird.

6. Verwendung des Verfahrens nach einem der Ansprüche 1 bis 3 zur Erkennung von aus Papier wiedergegebenen Objekten, wie Buchstaben oder Tönen in einer Notendarstellung, wobei das digitale Bild mittels einem Scanner erzeugt wird.

**Claims**

1. Method for allocating the content of a digital image into a class of a classification system, wherein the image is represented by N pixels, wherein a pixel lies in a predetermined co-ordinate system at the location $(x_i, y_j)$ and the image extends over the co-ordinates $(0,0)$ as far as $(x_{imax}, y_{jmax})$ and imax is the maximum number of pixels in the direction of the x-co-ordinate and jmax is the maximum number of pixels in the direction of the y-co-ordinate, and at least one numerical content attribute data[j,i] is allocated to each pixel, with the following steps:

   - Determining at least one group of a predetermined number of F numerical form features $\Psi m$ with m as the number index, wherein $\Psi m$ is a transformed expression of the moment $\overline{\rho^m}$ and $\overline{\rho^m}$ results from

$$\overline{\rho^m} = k_m \overline{R^m}$$

   With

$$k_m = \frac{(m+2)}{2}\left(\frac{\pi}{|A|}\right)^{\frac{m}{2}}$$

$$A = m_{0,0} = \Delta a * \Delta b * \sum_{j=1}^{j\max}\sum_{i=1}^{i\max} data[j,i]$$

$$\overline{R^m} = \frac{\upsilon_m}{\upsilon_0} = \frac{\upsilon_m}{m_{0,0}}$$

$$\upsilon_m = \Delta a * \Delta b * \sum_{j=1}^{j\max}\sum_{i=1}^{i\max}(R(j,i))^m data[j,i]$$

$$R(j,i) = \sqrt{((i-0,5)*\Delta a - \overline{x})^2 + ((j-0,5)*\Delta b - \overline{y})^2}$$

$$\overline{x} = \frac{m_{1,0}}{m_{0,0}}$$

$$\overline{y} = \frac{m_{0,1}}{m_{0,0}}$$

$$m_{1,0} = (\Delta a)^2 * \Delta b * \sum_{j=1}^{j\,\text{max}} \sum_{i=1}^{i\,\text{max}} (i - 0,5) * data[j,i]$$

$$m_{0,1} = (\Delta b)^2 * \Delta a * \sum_{j=1}^{j\,\text{max}} \sum_{i=1}^{i\,\text{max}} (j - 0,5) * data[j,i]$$

where $\Delta a$ = width of the pixel in the x-co-ordinate direction
where $\Delta b$ = width of the pixel in the y-co-ordinate direction
data $[j,i]$ = content attribute of the pixel at the point $(y_j, x_i)$
m = a number from 1 to F running continuously with counting of the form features,

- Comparing the value of each form feature of the F numerical form features determined for the image, in the at least one group with the value deposited in a table relating to the individual form feature of this group, wherein values are allocated in the table of each class for the individual numerical form features of this group,
- Issuing the class as an allocation class, into which the image to be identified was classified, in which the F numerical form features determined for the image best correspond to the values indicated in the table for this class.

2. Method according to Claim 1, **characterised in that** the form feature $\Psi m$ is determined by the transformation

$$\psi_m = \sqrt[m]{\dfrac{1}{\rho^m}}$$

3. Method according to Claim 1 or 2, **characterised in that** the number F of the numerical form features $\psi m$ is determined from at least 29 samples per class of the classification system, by the number F being increased to the extent that the values determined for the samples of a class for the form features $\psi m$ differ at least in their numerical value for at least one form feature $\psi m$ from the numerical values of this form feature $\Psi m$ of the other classes.

4. Use of the method according to any one of Claims 1 to 3 for allocating defects in cast components to defect classes defined in an industrial standard, wherein the digital image is produced by means of radioscopy.

5. Use of the method according to any one of Claims 1 to 3 for allocating defects in welding seams to defect classes defined in an industrial standard, wherein the digital image is produced by means of radioscopy.

6. Use of the method according to any one of Claims 1 to 3 to identify objects reproduced from paper, such as letters or colour shades, in a note representation, wherein the digital image is produced by means of a scanner.

**Revendications**

1. Procédé pour affecter le contenu d'une image numérique à une classe d'un système de classification, l'image étant représentée par N pixels, un pixel étant situé au lieu $(x_i, y_j)$ dans un système de coordonnées prédéfini et l'image s'étendant des coordonnées (0, 0) à $(x_{i\text{max}}, y_{j\text{max}})$, imax étant le nombre maximal de pixels dans la direction des coordonnées x et jmax le nombre maximal de pixels dans la direction des coordonnées y, et au moins un attribut de contenu numérique data[j,i] étant affecté à chaque pixel, lequel procédé comporte les étapes suivantes :

- détermination d'au moins un groupe d'un nombre prédéfini de F caractéristiques de forme numériques $\psi_m$ avec m comme indice de comptage, $\psi_m$ étant une expression transformée du moment $\overline{\rho^m}$ et $\overline{\rho^m}$ étant obtenu

à partir de

$$\overline{\rho^m} = k_m \overline{R^m}$$

avec

$$k_m = \frac{(m+2)}{2}\left(\frac{\pi}{|A|}\right)^{\frac{m}{2}}$$

$$A = m_{0,0} = \Delta a * \Delta b * \sum_{j=1}^{j\,\max} \sum_{i=1}^{i\,\max} data[j,i]$$

$$\overline{R^m} = \frac{\upsilon_m}{\upsilon_0} = \frac{\upsilon_m}{m_{0,0}}$$

$$\upsilon_m = \Delta a * \Delta b * \sum_{j=1}^{j\,\max} \sum_{i=1}^{i\,\max} (R(j,i))^m \, data[j,i]$$

$$R(j,i) = \sqrt{((i-0,5)*\Delta a - \overline{x})^2 + ((j-0,5)*\Delta b - \overline{y})^2}$$

$$\overline{x} = \frac{m_{1,0}}{m_{0,0}}$$

$$\overline{y} = \frac{m_{0,1}}{m_{0,0}}$$

$$m_{1,0} = (\Delta a)^2 * \Delta b * \sum_{j=1}^{j\,\max} \sum_{i=1}^{i\,\max} (i-0,5) * data[j,i]$$

$$m_{0,1} = (\Delta b)^2 * \Delta a * \sum_{j=1}^{j\,\max} \sum_{i=1}^{i\,\max} (j-0,5) * data[j,i]$$

$\Delta a$ = largeur du pixel dans la direction des coordonnées x
$\Delta b$ = largeur du pixel dans la direction des coordonnées y
data[j,i] = attribut de contenu du pixel au point $(y_j, x_i)$
m = un nombre de 1 à F incrémenté avec le comptage des caractéristiques de forme

- comparaison de la valeur de chaque caractéristique de forme des F caractéristiques de forme numériques déterminées pour l'image dans ledit au moins un groupe avec la valeur stockée dans un tableau pour la caractéristique de forme respective de ce groupe, des valeurs pour les différentes caractéristiques de forme numériques de ce groupe étant affectées à chaque classe dans le tableau,

- sortie de la classe comme classe d'affectation dans laquelle l'image à reconnaître a été classifiée pour laquelle les F caractéristiques de forme numériques déterminées pour l'image correspondent le mieux aux valeurs de caractéristiques de forme numériques déterminées pour l'image indiquées pour cette classe dans le tableau.

**2.** Procédé selon la revendication 1, **caractérisé en ce que** la caractéristique de forme $\psi_m$ est déterminée par la transformation

$$\Psi_m = \sqrt[m]{\dfrac{1}{\overline{\rho^m}}} \ .$$

**3.** Procédé selon la revendication 1 ou 2, **caractérisé en ce que** le nombre F de caractéristiques de forme $\psi_m$ est déterminé à partir d'au moins 29 échantillons par classe du système de classification, le nombre F étant augmenté suffisamment pour que les valeurs pour les caractéristiques de forme $\psi_m$ déterminées pour les échantillons d'une classe diffèrent au moins par leur valeur numérique pour au moins une caractéristique de forme $\psi_m$ des valeurs numériques de cette caractéristique de forme $\psi_m$ des autres classes.

**4.** Utilisation du procédé selon l'une des revendications 1 à 3 pour l'affectation de défauts de pièces moulées à des classes de défauts définies dans une norme industrielle, l'image numérique étant générée par radioscopie.

**5.** Utilisation du procédé selon l'une des revendications 1 à 3 pour l'affectation de défauts de cordons de soudure à des classes de défauts définies dans une norme industrielle, l'image numérique étant générée par radioscopie.

**6.** Utilisation du procédé selon l'une des revendications 1 à 3 pour la reconnaissance d'objets reproduits à partir de papier, comme des lettres ou des sons dans une partition, l'image numérique étant générée au moyen d'un scanner.

Buchstabe A: (zentriert, 96, normal)

Buchstabe A: (zentriert, 96, 90° gedreht)

Buchstabe A: (zentriert, 48, normal)

**Fig. 1**

Buchstabe B: (zentriert, 96, normal)

Buchstabe B: (zentriert, 96, 90° gedreht)

Buchstabe B: (zentriert, 48, normal)

**Fig. 2**

Buchstabe C: (zentriert, 96, normal)

Buchstabe C: (zentriert, 96, 90° gedreht)

Buchstabe C: (zentriert, 48, normal)

**Fig. 3**

**EP 1 789 909 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0854435 B1

- EP 0649113 B1

**In der Beschreibung aufgeführte Nicht-Patentliteratur**

- **M. K. Hu.** Visual Pattern Recognition by Moment Invariants. *IRE Trans. Info. Theory,* 1962, vol. IT-8, 179-187

- **R. C. Gonzalez ; R. E. Woods.** Digital Image Processing. Addison-Wesley Publishing Company, 1992, 514-518
- **H. Niemann.** Klassifikation von Mustern. Springer Verlag, 1983, 200ff